# EUROPEAN PATENT APPLICATION

(11) **EP 4 621 939 A1**
(43) Date of publication of application: **24.09.2025**
(21) Application number: 25164347.4
(22) Date of filing: 18.03.2025
(51) Int. Cl.: H01M 10/613, H01M 10/617, H01M 10/647, H01M 10/6556, H01M 10/6557

(54) **TEMPERATURE REGULATOR**

(30) Priority: 22.03.2024 JP 2024046175
(71) Applicant: Aisin Corporation, Aichi 448-8650 (JP)
(72) Inventor: YONEDA, Yusuke, Kariya, Aichi, 448-8650 (JP); WATANABE, Noriyuki, Kariya, Aichi, 448-8650 (JP)
(74) Representative: TBK

(57) **Abstract**

A temperature regulator (30) that regulates a temperature of a battery including a battery module (10) having a plurality of cells disposed side by side along a first direction, the temperature regulator includes: a plurality of temperature regulating units (71) provided between side surfaces of two of the cells adjacent to each other along the first direction and each having a first flat plate portion (37) and a second flat plate portion (38) facing each other along the first direction; a supply path (72) configured to allow a fluid to be supplied to an introduction port (30Ba) of each of the temperature regulating units; a discharge path (73) configured to allow the fluid to be discharged from a discharge port (30Bb) of each of the temperature regulating units to an outside; and a plurality of connection walls (74) connecting end portions of the first flat plate portion and the second flat plate portion along a second direction intersecting the first direction. The temperature regulating unit includes, between the first flat plate portion and the second flat plate portion, a first flow path (31A) which communicates with the introduction port and through which the fluid flows, and a second flow path (31B) configured to allow the fluid from the first flow path to return and flow and communicating with the discharge port. A flow path cross section area of the second flow path is smaller than a flow path cross section area of the first flow path.

## Description

### TECHNICAL FIELD

This disclosure relates to a temperature regulator capable of regulating a temperature of a battery.

### BACKGROUND DISCUSSION

In recent years, automobiles including a motor as a traveling drive source (such as a hybrid electric vehicle (HEV), a plug-in hybrid electric vehicle (PHEV), a battery electric vehicle (BEV), and a fuel cell electric vehicle (FCEV)) becomes widespread. A battery for driving the motor (hereinafter, also simply referred to as a battery) is mounted on these automobiles (hereinafter, collectively referred to as "electric vehicles").

Usually, a battery mounted on the electric vehicle is formed by accommodating a battery module in which a plurality of cells are disposed side by side in parallel in a container. Therefore, when the battery is used, heat is accumulated inside the container due to heat generation, and a temperature becomes high. When the temperature of the battery becomes high, the battery is likely to deteriorate. Therefore, a technique for cooling the battery has been studied (see, for example, Chinese Patent Application Publication No. 114665188 (Reference 1)).

Reference 1 discloses a device that cools a battery mounted on a vehicle. In this device, a plurality of cooling plates are provided along a battery module. The cooling plate is provided with an inflow port on one end side and an outflow port on the other end side. A fluid is introduced into each of these inflow ports from an introduction port provided in the battery module.

In the device described in Reference 1, in each of the plurality of cooling plates, an amount of flowing fluid increases as the cooling plate is closer to the introduction port, and the amount of flowing fluid decreases as the cooling plate is farther from the introduction port. Therefore, a flow rate of the fluid flowing through each of the plurality of cooling plates varies, and the temperature of the battery module cannot be appropriately regulated.

A need thus exists for a temperature regulator capable of appropriately regulating the temperature of the battery module.

### SUMMARY

A characteristic configuration of a temperature regulator according to this disclosure is a temperature regulator that regulates a temperature of a battery including a battery module having a plurality of cells disposed side by side along a first direction, and the temperature regulator includes: a plurality of temperature regulating units provided between side surfaces of two of the cells adjacent to each other along the first direction and each having a first flat plate portion and a second flat plate portion facing each other along the first direction; a supply path configured to allow a fluid to be supplied to an introduction port of each of the temperature regulating units; a discharge path configured to allow the fluid to be discharged from a discharge port of each of the temperature regulating units to an outside; and a plurality of connection walls connecting end portions of the first flat plate portion and the second flat plate portion along a second direction intersecting the first direction, in which the temperature regulating unit includes, between the first flat plate portion and the second flat plate portion, a first flow path which communicates with the introduction port and through which the fluid flows, and a second flow path configured to allow the fluid from the first flow path to return and flow and communicating with the discharge port, and a flow path cross section area of the second flow path is smaller than a flow path cross section area of the first flow path.

With such a characteristic configuration, in each of the plurality of temperature regulating units, by making the flow path cross section area of the second flow path smaller than the flow path cross section area of the first flow path, it is possible to increase a flow resistance of the fluid flowing through the first flow path. By increasing the flow resistance of the fluid flowing through the first flow path, an amount of the fluid flowing from the supply path to the upstream battery module along the first direction is reduced, and the fluid from the supply path spreads to the downstream battery module along the first direction, so that it is possible to reduce the flow rate difference between the upstream side and the downstream side in the battery module. As described above, according to the present configuration, by making the flow path cross section area of the second flow path smaller than the flow path cross section area of the first flow path, it is possible to perform equal flow distribution in the battery module. Therefore, the temperature of the battery module can be appropriately regulated.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a plan view of a battery using a temperature regulator;
FIG. 2 is a cross-sectional view taken along a line II-II in FIG. 1;
FIG. 3 is a cross-sectional view of a plate member taken along a first direction;
FIG. 4 is a diagram showing flow rates through a plurality of temperature regulating units;
FIG. 5 shows a relationship between a flow rate difference and a ratio of a flow path cross section area of a second flow path to a flow path cross section area of a first flow path; and
FIG. 6 is a cross-sectional view of a plate member according to another embodiment taken along the first direction.

### DETAILED DESCRIPTION

Hereinafter, embodiments of a temperature regulator according to disclosed here will be described with reference to the drawings. The embodiments described below are examples for explaining this disclosure, and this disclosure is not limited to these embodiments. Therefore, this disclosure can be implemented in various forms without departing from the gist thereof.

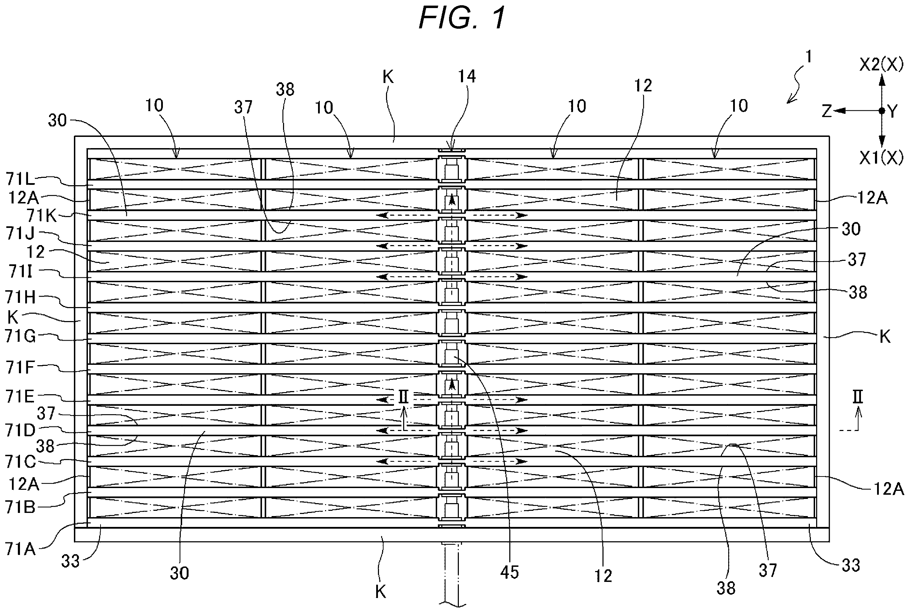

As shown in FIGS. 1 to 3, a battery 1 using a temperature regulator 30 according to the present embodiment includes a battery module 10 having a plurality of (twelve in the present embodiment) rectangular parallelepiped cells 12 disposed along a first direction X, and a plurality of (four in the present embodiment) the battery modules 10 are adjacently disposed along a third direction Z intersecting (orthogonal to) both the first direction X and a second direction Y intersecting (orthogonal to) the first direction X. The temperature regulator 30 regulates a temperature of such a battery 1. Regulating the temperature of the battery 1 means maintaining the temperature of the battery 1 at a predetermined temperature (maintaining the temperature so as to be included in a predetermined temperature zone), and includes cooling of the battery 1 when the temperature of the battery 1 is higher than the predetermined temperature and warming up of the battery 1 when the temperature of the battery 1 is lower than the predetermined temperature.

Here, the first direction X is a vehicle front-rear direction, X1 is a vehicle front direction, and X2 is a vehicle rear direction. The second direction Y is a vehicle upper-lower direction, and the third direction Z is a vehicle left-right direction. Hereinafter, a case where a cooling circuit (not shown) including a radiator is disposed in front of the vehicle and the battery 1 is accommodated in a battery accommodation space at a bottom of a center of the vehicle will be described as an example.

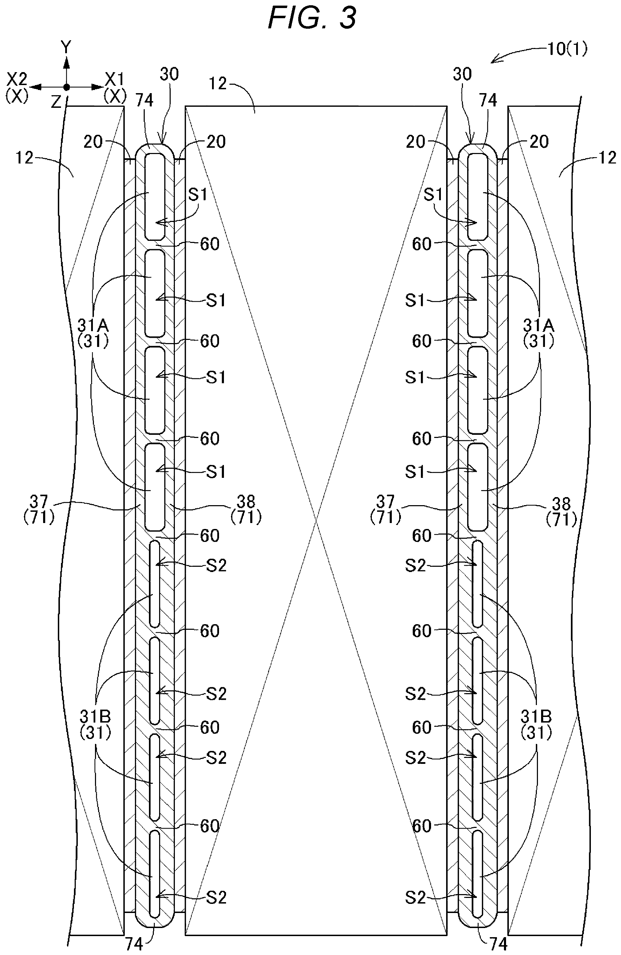

The battery 1 is accommodated in the battery accommodation space at the bottom of the vehicle in a state of being restrained by a restraint member K made of metal or the like. As shown in FIG. 3, the battery 1 includes sheet-shaped heat transfer sheets 20 having one surfaces that come into contact with ventral surfaces (side surfaces along the second direction Y) of all the cells 12 of the battery module 10, and the temperature regulator 30 that is in close contact with the other surfaces of the heat transfer sheet 20 and is adjacent to the side surfaces of all the cells 12 of the battery module 10. The temperature regulator 30 is made of a metal material such as aluminum or iron. In FIG. 1, the heat transfer sheet 20 is not shown.

The plurality of cells 12 are disposed side by side in a state of being electrically connected to each other. The battery 1 is used, for example, in an electric vehicle including a motor as a traveling drive source. The heat transfer sheets 20 and the temperature regulator 30 may not be adjacent to all the cells 12, but may be adjacent to the plurality of the cells 12. As described above, the temperature regulator 30 may be provided in a state where a solid object (the heat transfer sheet 20 or the like) is interposed between the cell 12 and the temperature regulator 30, or may be in direct contact with the cell 12.

For example, a lithium ion battery is used as the cell 12. The battery module 10 generates a high voltage by connecting the plurality of cells 12 in series. The cell 12 generates heat with power generation (discharge). When the temperature of the cell 12 rises due to the heat generation, power generation performance of the cell 12 decreases, and thus it is necessary to cool the cell 12. Therefore, in the present embodiment, the temperature regulator 30 is disposed between the adjacent cells 12 to directly cool the side surfaces of the cells 12.

The heat transfer sheet 20 is made of a material having a high thermal conductivity such as silicone. As shown in FIG. 3, by bringing the heat transfer sheet 20 into close contact between the cell 12 and the temperature regulator 30, heat generated in the battery module 10 is efficiently transferred to the temperature regulator 30 via the heat transfer sheet 20. Accordingly, the temperatures of the plurality of cells 12 constituting the battery module 10 can be regulated.

As shown in FIGS. 1 to 3, the temperature regulator 30 includes temperature regulating units 71, a supply path 72, a discharge path 73, connection walls 74, and partition walls 60. The temperature regulator 30 includes a plurality of temperature regulating units 71. Each of the plurality of temperature regulating units 71 includes a first flat plate portion 37 and a second flat plate portion 38. The first flat plate portion 37 and the second flat plate portion 38 face each other along the first direction X. Therefore, the first flat plate portion 37 and the second flat plate portion 38 are provided so as to face predetermined surfaces of the cell 12 and extend along the second direction Y. In the present embodiment, a set of the first flat plate portion 37 and the second flat plate portion 38 is provided between the side surfaces of two cells 12 adjacent to each other along the first direction X.

The connection wall 74 connects end portions of the first flat plate portion 37 and the second flat plate portion 38 along the second direction Y. In the present embodiment, the connection wall 74 connects the first flat plate portion 37 and the second flat plate portion 38 to each other in the first direction X at both end portions of the first flat plate portion 37 and the second flat plate portion 38 along the second direction Y. Therefore, a plurality of connection walls 74 are provided in the temperature regulating unit 71. The connection wall 74 in the present embodiment has a leakage prevention function of connecting the first flat plate portion 37 and the second flat plate portion 38 in a state where the fluid does not leak.

The partition wall 60 partitions a region sandwiched between the first flat plate portion 37 and the second flat plate portion 38 in the first direction X. In the present embodiment, a plurality of partition walls 60 are provided in the temperature regulator 30. Accordingly, the partition wall 60 partitions the region sandwiched between the first flat plate portion 37 and the second flat plate portion 38 into a plurality of flow path forming regions 31. A communication path 35 communicating with the plurality of flow path forming regions 31 is provided on an end portion 33 side along the third direction Z in the region sandwiched between the first flat plate portion 37 and the second flat plate portion 38. The fluid is cooling water such as a long-life coolant (LLC), insulating oil such as paraffinic oil, or a refrigerant such as a hydrofluorocarbon (HFC) or a hydrofluoroolefin (HFO). In the present embodiment, it is preferable to use a liquid having high electrical insulation properties such as cooling water such as a long-life coolant (LLC) or insulating oil such as paraffinic oil.

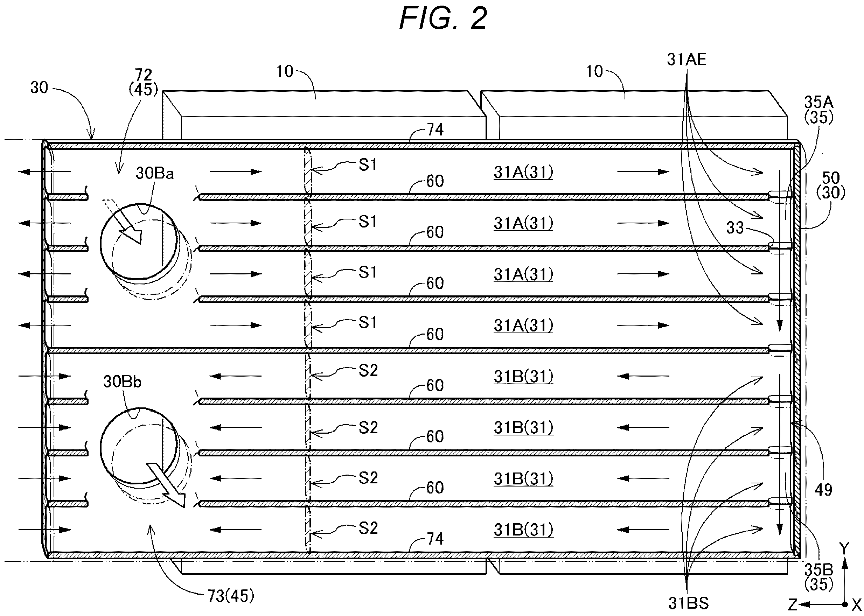

As shown in FIG. 2, the temperature regulating unit 71 includes first flow paths 31A and second flow paths 31B between the first flat plate portion 37 and the second flat plate portion 38. The first flow path 31A communicates with a fluid introduction portion 30Ba (an example of an "introduction port") of each of the plurality of temperature regulating units 71 to which the fluid is supplied from the supply path 72, and the fluid supplied to the fluid introduction portion 30Ba flows. Accordingly, the first flow path 31A causes the fluid supplied from the fluid introduction portion 30Ba to flow toward both end portions 33 in the third direction Z. Four first flow paths 31A are formed along the second direction Y between the fluid introduction portion 30Ba and one of both end portions 33 in the third direction Z.

The second flow path 31B communicates with a fluid discharge portion 30Bb (an example of a "discharge port") of each of the plurality of temperature regulating units 71 that causes the fluid from the first flow path 31A to return and flow and discharge the fluid to the outside. Accordingly, the second flow path 31B causes the fluid to flow from both end portions 33 in the third direction Z toward the fluid discharge portion 30Bb. That is, a flow direction of the fluid in the second flow path 31B is opposite to a flow direction of the fluid in the first flow path 31A. Four second flow paths 31B are formed along the second direction Y between one side of both end portions 33 in the third direction Z and the fluid discharge portion 30Bb.

As shown in FIGS. 2 and 3, the flow path forming region 31 including the first flow path 31A and the second flow path 31B is partitioned by the partition walls 60 described above, respectively. As shown in FIG. 3, the partition wall 60 is provided with a uniform width with respect to the second direction Y as viewed in the third direction Z, and a portion of the partition wall 60 in contact with each of the first flat plate portion 37 and the second flat plate portion 38 is formed in an arc shape. Such a partition wall 60 can be formed together with the first flat plate portion 37 and the second flat plate portion 38 by extrusion molding or the like.

The communication path 35 is a communication space that connects the four first flow paths 31A and the four second flow paths 31B along the second direction Y at both end portions 33 in the third direction Z. That is, the flow path forming region 31 has a return structure in which the four first flow paths 31A and the four second flow paths 31B communicate with each other by the communication paths 35 at both end portions 33 to change the flow direction of the fluid to the opposite direction. In other words, the communication path 35 is configured such that the end portion 33 side along the third direction Z between the first flat plate portion 37 and the second flat plate portion 38 communicates with a downstream end 31AE on the side opposite to the fluid introduction portion 30Ba in the first flow path 31A and an upstream end 31BS on the side opposite to the fluid discharge portion 30Bb in the second flow path 31B and is returned back. The downstream end 31AE of the first flow path 31A corresponds to a portion where each of the plurality of first flow paths 31A merges an upstream flow path 35A in the communication path 35. The upstream end 31BS of the second flow path 31B corresponds to a portion of the communication path 35 where each of the plurality of second flow paths 31B diverges from a downstream flow path 35B. The upstream flow path 35A in the communication path 35 is a flow path where each of the plurality of first flow paths 31A in the communication path 35 merges, and the downstream flow path 35B in the communication path 35 is a flow path that diverges into each of the plurality of second flow paths 31B in the communication path 35.

As shown in FIG. 1, both end portions 33 provided with the communication paths 35 are located at positions facing both end portions 12A farthest from a center region 14 in the cells 12 of the two outer battery modules 10 of the four battery modules 10 disposed side by side along the third direction Z. In the present embodiment, flow path cross section areas S1 of the four first flow paths 31A are equal to each other, and flow path cross section areas S2 of the four second flow paths 31B are equal to each other. The number and shapes of the first flow paths 31A and the second flow paths 31B can be freely changed, and the first flow paths 31A and the second flow paths 31B may be, for example, square holes one each on the left and right.

In the present embodiment, as shown in FIG. 3, the temperature regulator 30 is provided between the side surfaces of the two cells 12 adjacent to each other along the first direction X. The side surfaces of the two cells 12 adjacent to each other along the first direction X correspond to surfaces perpendicular to the first direction X, that is, surfaces parallel to a YZ plane among the surfaces of the cells 12 formed in a quadrangular prism shape. By allowing the fluid to flow through the first flow path 31A and the second flow path 31B of the temperature regulator 30, the side surface of the cell 12 can be directly cooled, and cooling efficiency is improved.

In the present embodiment, as shown in FIG. 1, the four battery modules 10 are provided along the third direction Z, and a piping member 45 is disposed in the center region 14 along the third direction Z in the battery 1. The center region 14 is a region between two battery modules 10 inside the four battery modules 10 disposed along the third direction Z. The piping member 45 is provided in the center region 14, communicates with the fluid introduction portion 30Ba, and causes the fluid to flow through each of the two battery modules 10 on one side in the third direction Z and the two battery modules 10 on the other side in the third direction Z. Therefore, the supply path 72 and the discharge path 73 are provided in the piping member 45.

A lid member 50 closes an opening portion 49 in a state of being fitted into the opening portion 49 of the end portion 33 along the third direction Z in the first flat plate portion 37 and the second flat plate portion 38. As described above, the temperature regulator 30 has the communication path 35 on the end portion 33 side along the third direction Z, and the outside of the communication path 35 in the third direction Z is open. The lid member 50 is provided so as to close the opened opening portion 49. The lid member 50 has the same shape as the opening portion 49 and has an outer shape slightly smaller than an inner shape of the opening portion 49. The lid member 50 is fitted into the opening portion 49. Accordingly, the opening portion 49 is closed by the lid member 50.

The lid member 50 is welded over the first flat plate portion 37, the second flat plate portion 38, and the connection wall 74 in a state of being fitted into the opening portion 49. For such bonding, for example, laser welding, brazing bonding, or arc welding can be used.

Each of the plurality of temperature regulating units 71 is configured such that the flow path cross section area S2 of the second flow path 31B is smaller than the flow path cross section area S1 of the first flow path 31A. The flow path cross section area S1 of the first flow path 31A is the flow path cross section area S1 of each of the four first flow paths 31A in one temperature regulating unit 71, and the flow path cross section area S2 of the second flow path 31B is the flow path cross section area S2 of each of the four second flow paths 31B in one temperature regulating unit 71. Therefore, each of the plurality of temperature regulating units 71 is configured such that the flow path cross section area S2 of each of the four second flow paths 31B in one temperature regulating unit 71 is smaller than the flow path cross section area S1 of each of the four first flow paths 31A in one temperature regulating unit 71.

In the present embodiment, as shown in FIG. 3, a length of each of the first flow paths 31A along the second direction Y is equal to a length of each of the second flow paths 31B along the second direction Y, and a length of each of the second flow paths 31B along the first direction X is shorter than a length of each of the first flow paths 31A along the first direction X. Accordingly, the flow path cross section area S2 of the second flow path 31B is configured to be smaller than the flow path cross section area S1 of the first flow path 31A. In the present embodiment, the flow path cross section areas S2 of all the second flow paths 31B of the plurality of temperature regulating units 71 are configured to be equal to each other.

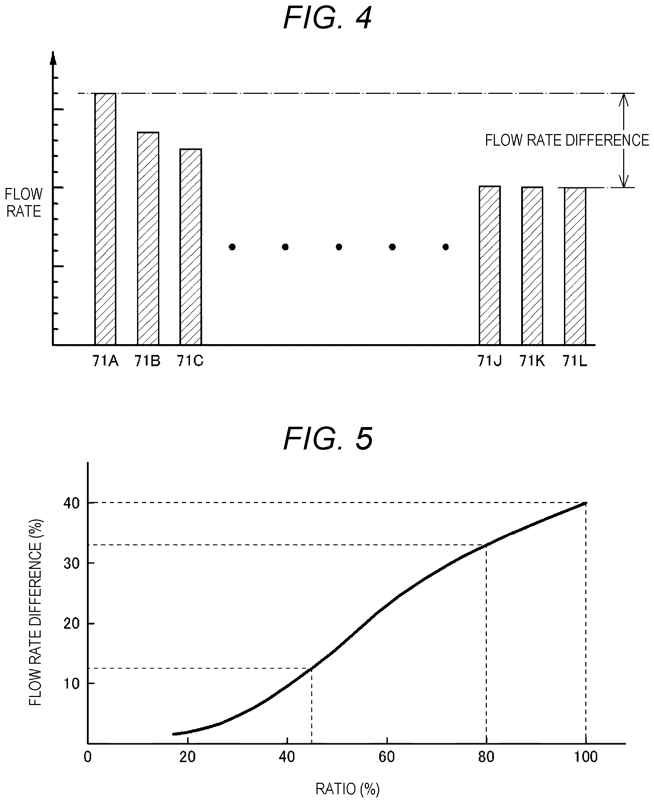

Here, a description will be given of a case where the temperature regulator 30 includes twelve temperature regulating units 71. The twelve temperature regulating units 71 are a temperature regulating unit 71A, a temperature regulating unit 71B, a temperature regulating unit 71C, a temperature regulating unit 71D, a temperature regulating unit 71E, a temperature regulating unit 71F, a temperature regulating unit 71G, a temperature regulating unit 71H, a temperature regulating unit 71I, a temperature regulating unit 71J, a temperature regulating unit 71K, and a temperature regulating unit 71L in order from a side (upstream) into which the fluid is introduced (see FIG. 1). When the flow path cross section area S2 of the second flow path 31B in each of the twelve temperature regulating units 71A to 71L is equal to the flow path cross section area S1 of the first flow path 31A, as shown in FIG. 4, a flow amount (flow rate) of the fluid in each of the temperature regulating units 71A to 71L decreases from the upstream toward the downstream. In the example of FIG. 4, there is a difference of about 40% between the flow rate of the fluid in the temperature regulating unit 71A and the flow rate of the fluid in the temperature regulating unit 71L (that is, the flow rate of the fluid flowing through the temperature regulating unit 71L is about 60% of the flow rate of the fluid flowing through the temperature regulating unit 71A).

On the other hand, when a ratio of the flow path cross section area S2 of the second flow path 31B to the flow path cross section area S1 of the first flow path 31A is reduced, the fluid is less likely to be discharged from the fluid discharge portion 30Bb communicating with the second flow path 31B to the discharge path 73. Accordingly, the flow rate of the fluid flowing through the first flow path 31A is reduced, and as shown in FIG. 5, a difference between the flow rate of the fluid in the temperature regulating unit 71A and the flow rate of the fluid in the temperature regulating unit 71L is reduced. As shown in FIG. 5, when the ratio of the flow path cross section area S2 of the second flow path 31B to the flow path cross section area S1 of the first flow path 31A is set to 100% to 80%, the difference between the flow rate of the fluid in the temperature regulating unit 71A and the flow rate of the fluid in the temperature regulating unit 71L can be reduced to 35% or less. On the other hand, when the ratio of the flow path cross section area S2 of the second flow path 31B to the flow path cross section area S1 of the first flow path 31A is too small, the fluid does not flow through the first flow path 31A and the second flow path 31B, and thus the ratio needs to be a predetermined value or more. In the present embodiment, the flow path cross section area S2 of the second flow path 31B is 20% or more and 80% or less of the flow path cross section area S1 of the first flow path 31A. Accordingly, as described above, it is possible to reduce the difference between the flow rate of the fluid in the temperature regulating unit 71A and the flow rate of the fluid in the temperature regulating unit 71L to 35% or less.

Further, when it is desired to reduce the difference between the flow rate of the fluid in the temperature regulating unit 71A and the flow rate of the fluid in the temperature regulating unit 71L, it is preferable that the flow path cross section area S2 of the second flow path 31B is equal to or less than 45% of the flow path cross section area S1 of the first flow path 31A. In this case, as shown in FIG. 5, the difference between the flow rate of the fluid in the temperature regulating unit 71A and the flow rate of the fluid in the temperature regulating unit 71L can be reduced to about 12.5%.

### Other Embodiments

Next, other embodiments of the temperature regulator 30 will be described.

In the above embodiment, it is described that the flow path cross section area S2 of the second flow path 31B is 20% or more and 80% or less of the flow path cross section area S1 of the first flow path 31A. However, the flow path cross section area S2 of the second flow path 31B may be, for example, 10% or more and 90% or less of the flow path cross section area S1 of the first flow path 31A. In addition, as long as the fluid flows through both the first flow path 31A and the second flow path 31B, the flow path cross section area S2 of the second flow path 31B may be less than 10% of the flow path cross section area S1 of the first flow path 31A.

In the above embodiment, it is described that the length of each of the first flow paths 31A along the second direction Y is equal to the length of each of the second flow paths 31B along the second direction Y, and the length of each of the second flow paths 31B along the first direction X is shorter than the length of each of the first flow paths 31A along the first direction X. However, the length of each of the first flow paths 31A along the first direction X may be equal to the length of each of the second flow paths 31B along the first direction X, and the length of each of the second flow paths 31B along the second direction Y may be shorter than the length of each of the first flow paths 31A along the second direction Y. In addition, as long as the flow path cross section area S2 of the second flow path 31B is smaller than the flow path cross section area S1 of the first flow path 31A, the length of the second flow path 31B along the first direction X may be longer than the length of the first flow path 31A along the first direction X, or the length of the second flow path 31B along the second direction Y may be longer than the length of the first flow path 31A along the second direction Y.

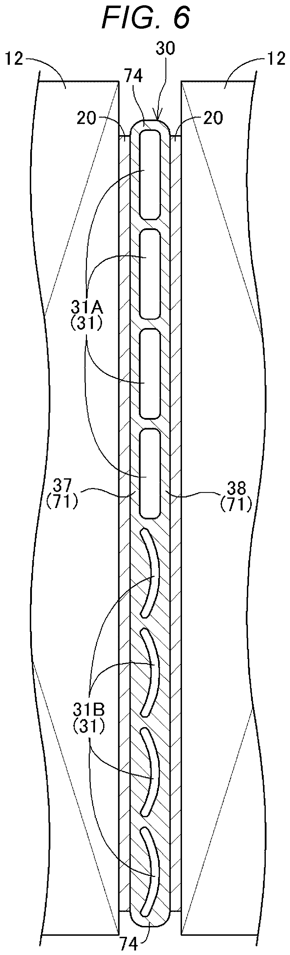

In the above embodiment, in FIG. 3, the second flow path 31B has a linear shape as viewed in the third direction Z. However, for example, as shown in FIG. 6, the second flow path 31B may have an arc shape as viewed in the third direction Z. In this case, since a contact area of the second flow path 31B with the first flat plate portion 37 and the second flat plate portion 38 can be made larger than that in the case of being formed in the linear shape, it is possible to efficiently perform heat transfer between the fluid flowing through the second flow path 31B and the first flat plate portion 37 and the second flat plate portion 38.

In the above embodiment, it is described that the flow path cross section areas S2 of all the second flow paths 31B of the plurality of temperature regulating units 71 are configured to be equal to each other. However, the flow path cross section area S2 of the second flow path 31B of a most upstream temperature regulating unit 71 among the plurality of temperature regulating units 71 may be smaller than the flow path cross section area S2 of the second flow path 31B of a most downstream temperature regulating unit 71 among the plurality of temperature regulating units 71. In this case, the flow path cross section area S2 of the second flow path 31B can be configured such that the flow path cross section area S2 of the second flow path 31B decreases toward the upstream, and the flow path cross section area S2 of the second flow path 31B increases toward the downstream among the plurality of temperature regulating units 71. That is, when the temperature regulator 30 includes the twelve temperature regulating units 71, the twelve temperature regulating units 71 are the temperature regulating unit 71A, the temperature regulating unit 71B, the temperature regulating unit 71C, the temperature regulating unit 71D, the temperature regulating unit 71E, the temperature regulating unit 71F, the temperature regulating unit 71G, the temperature regulating unit 71H, the temperature regulating unit 711, the temperature regulating unit 71J, the temperature regulating unit 71K, and the temperature regulating unit 71L in order from the side (upstream) into which the fluid is introduced. In this case, the flow path cross section area S2 of the second flow path 31B in the temperature regulating unit 71A may be configured to be the smallest, and the flow path cross section area S2 of the second flow path 31B in the temperature regulating unit 71L may be configured to be the largest.

### Overview of Above Embodiment

An overview of the temperature regulator 30 described above will be described below.
(1) The temperature regulator 30 is the temperature regulator 30 that regulates the temperature of the battery 1 including the battery module 10 having the plurality of cells 12 disposed side by side along the first direction X, and includes: the plurality of temperature regulating units 71 provided between the side surfaces of the two cells 12 adjacent to each other along the first direction X and each having the first flat plate portion 37 and the second flat plate portion 38 facing each other along the first direction X; the supply path 72 configured to allow a fluid to be supplied to the fluid introduction portion 30Ba (introduction port) of each of the temperature regulating units 71; the discharge path 73 configured to allow the fluid to be discharged from the fluid discharge portion 30Bb (discharge port) of each of the temperature regulating units 71 to the outside; and the plurality of connection walls 74 connecting end portions of the first flat plate portion 37 and the second flat plate portion 38 along the second direction Y intersecting the first direction X. The temperature regulating unit 71 includes, between the first flat plate portion 37 and the second flat plate portion 38, the first flow path 31A which communicates with the fluid introduction portion 30Ba and through which the fluid flows, and the second flow path 31B configured to allow the fluid from the first flow path 31A to return and flow and communicating with the fluid discharge portion 30Bb, and the flow path cross section area S2 of the second flow path 31B is smaller than the flow path cross section area S1 of the first flow path 31A.
   According to this configuration, in each of the plurality of temperature regulating units 71, by making the flow path cross section area S2 of the second flow path 31B smaller than the flow path cross section area S1 of the first flow path 31A, it is possible to increase a flow resistance of the fluid flowing through the first flow path 31A. By increasing the flow resistance of the fluid flowing through the first flow path 31A, an amount of the fluid flowing from the supply path 72 to the upstream battery module 10 along the first direction X is reduced, and the fluid from the supply path 72 spreads to the downstream battery module 10 along the first direction X, so that it is possible to reduce the flow rate difference between the upstream side and the downstream side in the battery module 10. As described above, according to the present configuration, by making the flow path cross section area S2 of the second flow path 31B smaller than the flow path cross section area S1 of the first flow path 31A, it is possible to perform equal flow distribution in the battery module 10. Therefore, the temperature of the battery module 10 can be appropriately regulated.
(2) In the temperature regulator 30 according to (1), the flow path cross section area S2 of the second flow path 31B may be 20% or more and 80% or less of the flow path cross section area S1 of the first flow path 31A.
   According to this configuration, in each of the plurality of temperature regulating units 71, it is possible to reduce the flow rate difference between the upstream side and the downstream side in the battery module 10 as compared with a case where the flow path cross section area S1 of the first flow path 31A and the flow path cross section area S2 of the second flow path 31B are equal to each other. Therefore, it is possible to perform the equal flow distribution in the battery module 10.
(3) In the temperature regulator 30 according to (2), the flow path cross section area S2 of the second flow path 31B may be 45% or less of the flow path cross section area S1 of the first flow path 31A.
   According to this configuration, in each of the plurality of temperature regulating units 71, it is possible to further reduce the flow rate difference between the upstream side and the downstream side in the battery module 10 as compared with the case where the flow path cross section area S1 of the first flow path 31A and the flow path cross section area S2 of the second flow path 31B are equal to each other.
(4) In the temperature regulator 30 according to any one of (1) to (3), the flow path cross section area S2 of the second flow path 31B of the most upstream temperature regulating unit 71 among the plurality of temperature regulating units 71 may be smaller than the flow path cross section area S2 of the second flow path 31B of the most downstream temperature regulating unit 71 among the plurality of temperature regulating units 71.

According to the present configuration, the flow resistance of the second flow path 31B in the upstream temperature regulating unit 71 in the battery module 10 can be made greater than the flow resistance of the second flow path 31B in the downstream temperature regulating unit 71 in the battery module 10. As a result, the amount of the fluid flowing through the battery module 10 on the further upstream side can be reduced, so that the fluid can easily flow through the battery module 10 on the downstream side. Therefore, it is possible to further reduce the flow rate difference between the upstream side and the downstream side in the battery module 10.

### Industrial Applicability

The technique according to the present disclosure can be used for a temperature regulator capable of regulating a temperature of a battery.

## Claims

1. A temperature regulator (30) that regulates a temperature of a battery including a battery module (10) having a plurality of cells disposed side by side along a first direction, the temperature regulator comprising:
a plurality of temperature regulating units (71) provided between side surfaces of two of the cells adjacent to each other along the first direction and each having a first flat plate portion (37) and a second flat plate portion (38) facing each other along the first direction;
a supply path (72) configured to allow a fluid to be supplied to an introduction port (30Ba) of each of the temperature regulating units;
a discharge path (73) configured to allow the fluid to be discharged from a discharge port (30Bb) of each of the temperature regulating units to an outside; and
a plurality of connection walls (74) connecting end portions of the first flat plate portion and the second flat plate portion along a second direction intersecting the first direction, wherein
the temperature regulating unit includes, between the first flat plate portion and the second flat plate portion, a first flow path (31A) which communicates with the introduction port and through which the fluid flows, and a second flow path (31B) configured to allow the fluid from the first flow path to return and flow and communicating with the discharge port, and
a flow path cross section area of the second flow path is smaller than a flow path cross section area of the first flow path.

2. The temperature regulator according to claim 1, wherein
the flow path cross section area of the second flow path is 20% or more and 80% or less of the flow path cross section area of the first flow path.

3. The temperature regulator according to claim 2, wherein
the flow path cross section area of the second flow path is 45% or less of the flow path cross section area of the first flow path.

4. The temperature regulator according to any one of claims 1 to 3, wherein
the flow path cross section area of the second flow path of a most upstream temperature regulating unit among the plurality of temperature regulating units is smaller than a flow path cross section area of the second flow path of a most downstream temperature regulating unit among the plurality of temperature regulating units.
